# EUROPEAN PATENT APPLICATION

(11) **EP 4 113 326 A1**
(43) Date of publication of application: **04.01.2023**
(21) Application number: 21761169.8
(22) Date of filing: 23.02.2021
(51) Int. Cl.: G06F 16/58, G06F 3/0481, G06F 16/587

(54) **SEARCH METHOD AND ELECTRONIC DEVICE**

(30) Priority: 26.02.2020 CN 202010120781
(71) Applicant: Vivo Mobile Communication Co., Ltd., Dongguan, Guangdong 523863 (CN)
(72) Inventor: ZHONG, Yujun, Dongguan, Guangdong 523863 (CN)
(74) Representative: Raffay & Fleck
(86) International application number: PCT/CN2021/077475
(87) International publication number: WO 2021/169954

(57) **Abstract**

A search method. The method comprises: an electronic device (700) receiving a first input of a user for a first icon, wherein the first icon is used for indicating first label information (201); the electronic device (700) displaying a first secondary icon of the first icon in response to the first input (202); the electronic device (700) receiving a second input of the user for the first secondary icon and a second icon, wherein the second icon is used for indicating second label information (203); and the electronic device (700) displaying a target object in response to the second input, wherein the target object is obtained by performing a search on the basis of the first label information and the second label information (204).

## Description

### CROSS-REFERENCE TO RELATED APPLICATIONS

This application claims priority to Chinese Patent Application No. 202010120781.3, filed on February 26, 2020 in China, which is incorporated herein by reference in its entirety.

### TECHNICAL FIELD

Embodiments of this application relate to the field of communications technologies, and in particular, to a search method and an electronic device.

### BACKGROUND

With continuous development of terminal technologies, an album function of an electronic device is increasingly rich. For example, the electronic device has a function of searching for a picture in an album application.

Currently, a user may trigger the electronic device to search for a picture in an album application by using a keyword. Specifically, the user may perform a manual input or a voice input on one or more keywords, and search for a corresponding picture in the album application according to these keywords.

However, in the foregoing picture search process, regardless that the user manually inputs a keyword or inputs a keyword through a voice input, the user may need to perform a plurality of times of inputs to search for the picture due to inaccurate input information, and therefore a speed of searching for a picture is relatively slow. Therefore, efficiency of searching for a picture by using a keyword by the electronic device is relatively low.

### SUMMARY

Embodiments of this application provide a search method and an electronic device, so that an existing problem that efficiency of searching for a picture based on a keyword by an electronic device is relatively low can be resolved.

To resolve the foregoing technical problem, this application is implemented as follows:

According to a first aspect, an embodiment of this application provides a search method, applied to an electronic device. The method includes: receiving a first input performed by a user on a first icon, where the first icon is used to indicate first label information; displaying a first sub-icon of the first icon in response to the first input; receiving a second input performed by the user on the first sub-icon and a second icon, where the second icon is used to indicate second label information; and displaying a target object in response to the second input, where the target object is obtained through searching based on the first label information and the second label information.

According to a second aspect, an embodiment of this application provides an electronic device. The electronic device includes a receiving module and a processing module. The receiving module is configured to receive a first input performed by a user on a first icon, where the first icon is used to indicate first label information. The display module is configured to display a first sub-icon of the first icon in response to the first input. The receiving module is further configured to receive a second input performed by the user on the first sub-icon and a second icon, where the second icon is used to indicate second label information. The display module is further configured to display a target object in response to the second input, where the target object is obtained through searching based on the first label information and the second label information.

According to a third aspect, an embodiment of this application provides an electronic device. The electronic device includes a processor, a memory, and a computer program that is stored in the memory and that can be run on the processor, where when the computer program is executed by the processor, the steps of the search method in the first aspect are implemented.

According to a fourth aspect, an embodiment of this application provides a computer-readable storage medium. The computer-readable storage medium stores a computer program, and the computer program is executed by a processor, the steps of the search method in the first aspect are implemented.

In the embodiments of this application, a first input performed by a user on a first icon may be received, where the first icon is used to indicate first label information; a first sub-icon of the first icon is displayed in response to the first input; a second input performed by the user on the first sub-icon and a second icon is received, where the second icon is used to indicate second label information; and a target object is displayed in response to the second input, where the target object is obtained through searching based on the first label information and the second label information. The embodiments of this application may be applied to a scenario in which when one or more files are quickly searched for in a large number of files, the user only needs to perform the first input on the first icon to trigger display of the sub-icon of the first icon, and perform the second input on the sub-icon and another icon, so that the electronic device is triggered to perform a multi-label combination search according to label information indicated by each icon selected by the user. Compared with an existing search manner, the operations in the embodiments of this application are simpler and more convenient, and search efficiency is higher.

### BRIEF DESCRIPTION OF DRAWINGS

FIG. 1 is a schematic architectural diagram of a possible Android operating system according to an embodiment of this application;
FIG. 2 is a first schematic flowchart of a search method according to an embodiment of this application;
FIG. 3 is a first schematic diagram of an album search interface to which a search method is applied according to an embodiment of this application;
FIG. 4 is a second schematic flowchart of a search method according to an embodiment of this application;
FIG. 5 is a second schematic diagram of an album search interface to which a search method is applied according to an embodiment of this application;
FIG. 6 is a third schematic diagram of an album search interface to which a search method is applied according to an embodiment of this application;
FIG. 7 is a third schematic flowchart of a search method according to an embodiment of this application;
FIG. 8 is a fourth schematic diagram of an album search interface to which a search method is applied according to an embodiment of this application;
FIG. 9 is a fifth schematic diagram of an album search interface to which a search method is applied according to an embodiment of this application;
FIG. 10 is a sixth schematic diagram of an album search interface to which a search method is applied according to an embodiment of this application;
FIG. 11 is a first schematic structural diagram of an electronic device according to an embodiment of this application;
FIG. 12 is a second schematic structural diagram of an electronic device according to an embodiment of this application;
FIG. 13 is a third schematic structural diagram of an electronic device according to an embodiment of this application; and
FIG. 14 is a schematic diagram of hardware of an electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

It should be understood that in this specification, a term "and/or" is an associative relationship for describing associated objects, indicating that three relationships may exist, for example, A and/or B, which may indicate three situations: A exists independently; A and B exist simultaneously; and B exists independently. In this specification, a symbol "/" indicates an "or" relationship between associated objects, for example, A/B indicates A or B.

In the specification and claims of this specification, the terms "first", "second", and so on are intended to distinguish between different objects but do not describe a particular order of the objects. For example, a first label, a second label, and the like are intended to distinguish between different labels, instead of describing a particular order of the labels.

In the embodiments of this application, the word such as "example" or "for example" is used to represent giving an example, an illustration, or a description. Any embodiment or design scheme described as "an example of" or "for example" in the embodiments of this application should not be explained as being more preferred or having more advantages than another embodiment or design scheme. Exactly, use of the term "example" or "for example" is intended to present a concept in a specific manner.

In the descriptions of the embodiments of this application, unless otherwise stated, "a plurality of" means two or more, for example, a plurality of processing units mean two or more processing units, and a plurality of elements mean two or more elements.

The embodiments of this application provide a search method and an electronic device. A first input performed by a user on a first icon may be received, where the first icon is used to indicate first label information; a first sub-icon of the first icon is displayed in response to the first input; a second input performed by the user on the first sub-icon and a second icon is received, where the second icon is used to indicate second label information; and a target object is displayed in response to the second input, where the target object is obtained through searching based on the first label information and the second label information. The embodiments of this application may be applied to a scenario in which when one or more files are quickly searched for in a large number of files, the user only needs to perform the first input on the first icon to trigger display of the sub-icon of the first icon, and perform the second input on the sub-icon and another icon, so that the electronic device is triggered to perform a multi-label combination search according to label information indicated by each icon selected by the user. Compared with an existing search manner, the operations in the embodiments of this application are simpler and more convenient, and search efficiency is higher.

The electronic device in the embodiments of this application may be an electronic device with an operating system. The operating system may be an Android (Android) operating system, an iOS operating system, or another possible operating system. This is not specifically limited in the embodiments of this application.

The following uses the Android operating system as an example to describe a software environment to which the search method provided in the embodiments of this application is applied.

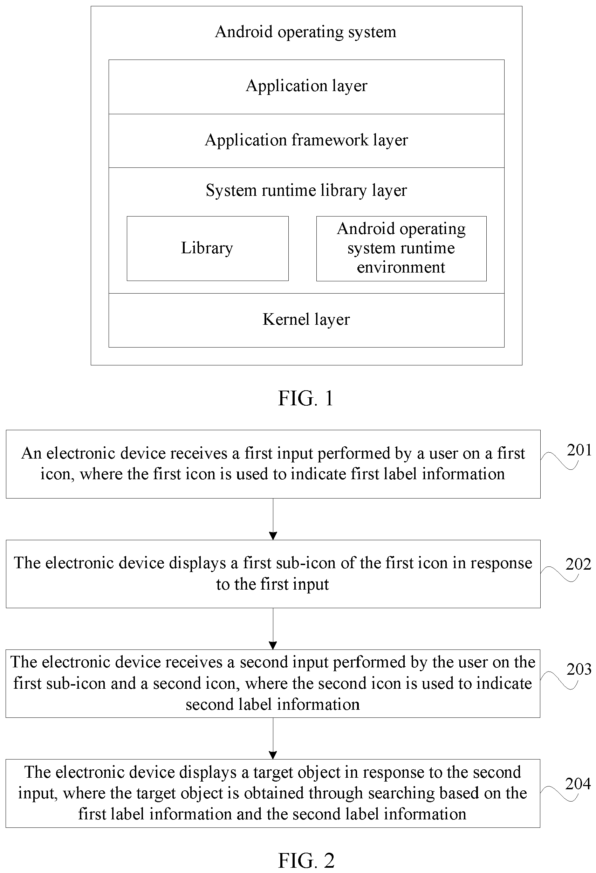

As shown in FIG. 1, FIG. 1 is a schematic architectural diagram of a possible Android operating system according to an embodiment of this application. In FIG. 1, an architecture of the Android operating system includes four layers: an application layer, an application framework layer, a system runtime library layer, and a kernel layer (which may be specifically a Linux kernel layer).

The application layer includes all applications in the Android operating system (including a system application and a third-party application).

The application framework layer is an application framework, and the developer may develop some applications based on the application framework layer when following a development rule of the application framework.

The system runtime library layer includes a library (also referred to as a system library) and an Android operating system runtime environment. The library mainly provides the Android operating system with various resources required by the Android operating system. The Android operating system runtime environment is used to provide the Android operating system with a software environment.

The kernel layer is an operating system layer of the Android operating system, and is a bottom-most layer in the Android operating system software layers. The kernel layer provides the Android operating system with a core system service and a hardware-related driver based on the Linux kernel.

The Android operating system is used as an example. In the embodiments of this application, a developer may develop, based on the system architecture of the Android operating system shown in FIG. 1, a software program to implement the search method provided in the embodiments of this application, so that the search method can run based on the Android operating system shown in FIG. 1. That is, a processor or an electronic device may run the software program in the Android operating system to implement the search method provided in the embodiments of this application.

The electronic device in the embodiments of this application may be a mobile terminal, or may be a non-mobile terminal. For example, the mobile terminal may be a mobile phone, a tablet computer, a laptop computer, a palmtop computer, an in-vehicle terminal, a wearable device, a ultra-mobile personal computer (ultra-mobile personal computer, UMPC), a netbook, or a personal digital assistant (personal digital assistant, PDA). The non-mobile terminal may be a personal computer (personal computer, PC), a television (television, TV), an automated teller machine or a self-service machine. This is not specifically limited in the embodiments of this application.

The search method provided in the embodiments of this application may be performed by the foregoing electronic device, or a functional module and/or a functional entity that can implement the search method in the electronic device. Specifically, this may be determined based on an actual use requirement, and is not limited in the embodiments of this application. The following exemplarily describes, by using an electronic device as an example, the search method provided in the embodiments of this application with reference to the accompanying drawings.

As shown in FIG. 2, an embodiment of this application provides a search method. The search method may include the following steps 201 to step 204.

Step 201: An electronic device receives a first input performed by a user on a first icon, where the first icon is used to indicate first label information.

The foregoing first icon may be used to indicate label information (that is, first label information) of a type of file. The user may identify, by using content displayed on the first icon (for example, content such as a text or an image), the label information indicated by the first icon. For ease of understanding, these icons such as the first icon and the following second icons may be collectively referred to as label icons.

Optionally, the foregoing file may be a picture file, a video file, an audio file, a document file, or the like, or certainly may be any other possible type of file. This is not limited in this embodiment of this application.

For example, the first icon and the following second icon may be used to indicate label information of a picture file. Because the label information is associated with one or more pictures (for example, a correspondence between a picture and label information is stored in an electronic device), the electronic device may find or search for, according to the label information, the one or more pictures corresponding to the label information.

In this embodiment of this application, the electronic device generally stores various types of files (for example, a picture, a video file, an audio file, or a document) and may have a relatively large number of files. In this case, if the user needs to quickly search for one or more files (which may be referred to as to-be-searched files below for short) from the large number of files, the user may perform an input on one or more label icons, to trigger the electronic device to search for, according to label information indicated by one or more label icons selected by the user, an object that matches the label information.

That is, the search method provided in this embodiment of this application may be applied to a scenario in which one or more files are quickly searched for from a large number of files.

Optionally, in this embodiment of this application, the first input includes but is not limited to: a long press input (that is, a press input whose pressing duration exceeds preset duration), a tap input, a slide input, a drag input, or the like, or may be any other input that meets an actual use requirement. This may be specifically determined according to an actual use requirement, and is not limited in this embodiment of this application.

Optionally, the foregoing first icon may display text label information, or may display graphic label information or picture label information, or may display any other possible label information. This may be specifically determined according to an actual use requirement, and is not limited in this embodiment of this application.

For example, it is assumed that the first icon is used to indicate label information of a picture file (for example, content associated with picture content), the first icon may display text label information, such as person text label information (for example, me, child, or parent) and location text label information (for example, Shanghai, home, or Hainan); or the first icon may display picture label information, for example, person picture label information (for example, a face image is displayed on the first icon) or location picture label information (for example, a location image is displayed on the first icon); or the first icon may display both text label information and picture label information.

In this way, the user can view content displayed on the first icon, and identify the label information indicated by the first icon, thereby facilitating selection by the user.

Step 202: The electronic device displays a first sub-icon of the first icon in response to the first input.

In this embodiment of this application, the first sub-icon may be used to indicate a duplicate of the first icon, and the first sub-icon may be further used to establish a search association relationship with another icon.

In this embodiment of this application, if label information corresponding to a to-be-searched file is displayed on the first icon, the user may press the first icon for a long time, and then the electronic device responds, to display the first sub-icon (also referred to as an operable sub-icon or a label preview icon) corresponding to the first icon.

Optionally, display forms (for example, display sizes, display content, or display locations) of the first sub-icon and the first icon may be the same, or may be different. This is not limited in this embodiment of this application. For example, the display forms of the first sub-icon and the first icon are different, so that the user can distinguish between an icon itself and a duplicate of the icon.

Optionally, the first sub-icon may be suspended in a target area associated with the first icon, and the target area may be an area that includes a preset range of a display area of the first icon. For example, the first sub-icon may be suspended above the first icon. The target area may also be an area of a preset range other than the display area of the first icon. For example, the first sub-icon may be suspended on one side of the first icon. Alternatively, the first sub-icon may move with a drag input performed by the user on the first sub-icon.

Step 203: The electronic device receives a second input performed by the user on the first sub-icon and a second icon, where the second icon is used to indicate second label information.

The second icon and the first icon respectively indicate different label information. For descriptions of the second icon, refer to the foregoing detailed descriptions of the first icon. Details are not described herein again.

Optionally, the second input may be a drag input on the first sub-icon and the second icon, or may be a tap input on the first sub-icon and the second icon (for example, a single-tap input or a double-tap input), or may be any other input that meets an actual use requirement. This may be specifically determined according to an actual use requirement, and is not limited in this embodiment of this application.

Step 204: The electronic device displays a target object in response to the second input, where the target object is obtained through searching based on the first label information and the second label information.

The target object may be a picture file, a video file, an audio file, a document file, or the like. A specific type of file the target object is may be determined based on label information indicated by one or more label icons selected by the user.

Optionally, there may be one or more target objects. This is not limited in this embodiment of this application.

In this embodiment of this application, the electronic device may prestore different label information for different files. In addition, for one file (for example, one picture), one piece of label information may be associated and stored in the electronic device, or a plurality of pieces of label information may be associated and stored in the electronic device. This is not limited in this embodiment of this application.

It can be understood that the target object is associated with the first label information and the second label information, that is, associated label information stored for the target object includes the first label information and the second label information, or a degree of matching the first label information and the second label information with associated label information stored for the target object is relatively high.

In this embodiment of this application, if label information corresponding to a to-be-searched file is displayed on both the first icon and the second icon, the user may first press the first icon for a long time, and then the electronic device responds, to display the first sub-icon corresponding to the first icon above the first icon. Further, the user may perform the second input on the first sub-icon and the second icon to select the first icon and the second icon (respectively indicating the first label information and the second label information), and then the electronic device responds, to display the target object associated with the first label information and the second label information to the user. In this way, an object can be quickly searched for through multi-label combination.

It should be noted that label information displayed on label icons such as the first icon and the second icon may be label information added by the electronic device, or may be label information added by the user. For example, when obtaining (for example, through photographing, Bluetooth transmission, or downloading) a picture, the electronic device may perform image analysis on the picture by using an image recognition technology, determine an image feature in the picture, determine label information of the picture according to the image feature, and add corresponding label information to the picture. For another example, the user may add corresponding label information to a picture in an album according to a personal requirement. For conventional descriptions of adding label information to a picture, refer to related steps of adding label information to a picture in the prior art. Details are not described herein.

The following uses a scenario in which the user searches for a type of picture in an album as an example to describe the foregoing search method in detail.

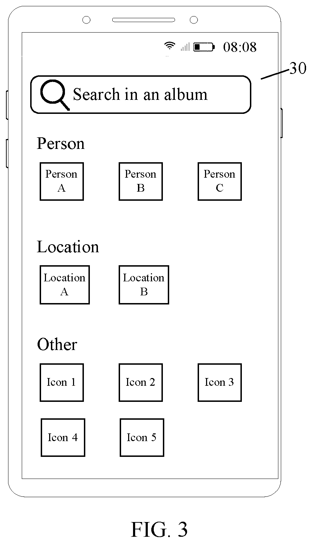

In this embodiment of this application, if the user needs to use the electronic device to search for a type of picture in an album, the user may trigger the electronic device to run an album application and display an album search interface. As shown in FIG. 3, an album search interface 30 displays a plurality of label icons (including the first icon and the second icon), and each label icon is used to indicate label information of a type of picture or video. The user may directly operate the plurality of label icons and select label information to search for a corresponding picture.

The following provides an exemplary description with reference to FIG. 3. As shown in FIG. 3, a person label bar, a location label bar, and another label bar are displayed on the album search interface 30. The person label bar includes the following label icons: a label of a person A, a label of a person B, and a label of a person C. The location label bar includes the following label icons: a label of a location A and a label of a location B.

For example, one or more pictures associated with the label of the person A include an image of the person A (for example, my portrait), one or more pictures associated with the label of the person B include an image of the person B (for example, a portrait of a child), and one or more pictures associated with the label of the location A include an image of the location A (for example, an image of a fountain square).

Optionally, the user may manually set (or add) text information for the label of the person A. For example, assuming that the person A is Xiaoming, the user may manually set (or add) text information "Xiaoming" for the label of the person A. In this way, through the label icon, the user can not only view image information of the person A, but also can view the name "Xiaoming" of the person A, to learn that a plurality of pictures associated with the label icon include an image of "Xiaoming".

For another example, for the label of the location A, the label icon may include image information (for example, a building) and text information of the location A. Through the label icon, the user can view the image information and the text information of the location A, to learn that a plurality of pictures associated with the label icon include an image of the location A.

Compared with an existing search manner of manually entering a text or performing a voice input by the user, and searching for a picture corresponding to a plurality of labels after determining the plurality of labels, in this embodiment of this application, a plurality of label icons may be directly displayed on an album search interface, so that through a simple tap or press operation, the user can quickly implement a multi-label combination search on a picture in an album. In this way, operations are simple and convenient, and an interaction manner is more intelligent, thereby greatly improving operation experience of using an album search function by the user.

According to the search method provided in this embodiment of this application, a first input performed by a user on a first icon may be received, where the first icon is used to indicate first label information; a first sub-icon of the first icon is displayed in response to the first input; a second input performed by the user on the first sub-icon and a second icon is received, where the second icon is used to indicate second label information; and a target object is displayed in response to the second input, where the target object is obtained through searching based on the first label information and the second label information. This embodiment of this application may be applied to a scenario in which when one or more files are quickly searched for in a large number of files, the user selects a plurality of label icons (each label icon indicates one piece of label information) through a simple tap or press operation, so that the electronic device is triggered to quickly search for a to-be-searched file according to a multi-label combination of one or more pieces of label information, thereby improving file search efficiency.

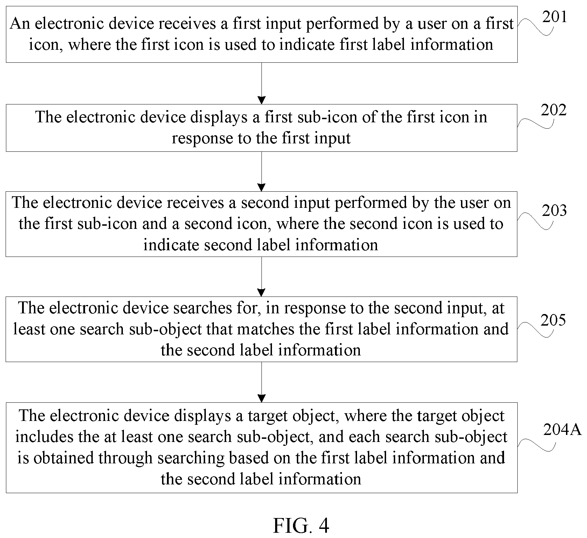

Optionally, the electronic device may first search for, according to the first label information and the second label information, for the target object that matches the first label information and the second label information; and then display the target object. For example, with reference to FIG. 3, as shown in FIG. 4, before the foregoing step 204 of displaying a target object, the search method provided in this embodiment of this application further includes the following step 205. Correspondingly, the foregoing step 204 may be specifically implemented by the following step 204A.

Step 205: The electronic device searches for, in response to the second input, at least one search sub-object that matches the first label information and the second label information.

The electronic device may determine whether the two are matched by using a matching degree.

For example, if a degree of matching between the first label information and label information of a first object is greater than a preset degree of matching (for example, 90%), and a degree of matching between the second label information and the label information of the first object is greater than the preset matching degree, the electronic device may determine the first object as a search sub-object.

Step 204A: The electronic device displays a target object, where the target object includes the at least one search sub-object, and each search sub-object is obtained through searching based on the first label information and the second label information.

In this embodiment of this application, if label information corresponding to a to-be-searched file is displayed on both the first icon and the second icon, the user may first press the first icon for a long time, and then the electronic device responds, to display the first sub-icon corresponding to the first icon above the first icon. Further, the user may perform the second input on the first sub-icon and the second icon to select the first icon and the second icon (respectively indicating the first label information and the second label information), and then the electronic device responds, to first search for, according to the first label information and the second label information, the target object that matches the first label information and the second label information, and then the electronic device displays the target object associated with the first label information and the second label information. In this way, the search method provided in this embodiment of this application can quickly implement a multi-label combination search on a picture in an album. Compared with an existing search manner, the operations in this embodiment of this application are simpler and more convenient, and search efficiency is higher.

The following exemplarily describes, by using implementation 1, implementation 2, and implementation 3, possible implementations of the search method provided in this embodiment of this application in the case of different forms of the second input.

### Implementation 1

For example, the foregoing step 203 may be specifically implemented by the following step 203A.

Step 203A: The electronic device receives the second input performed by the user to drag the first sub-icon onto the second icon.

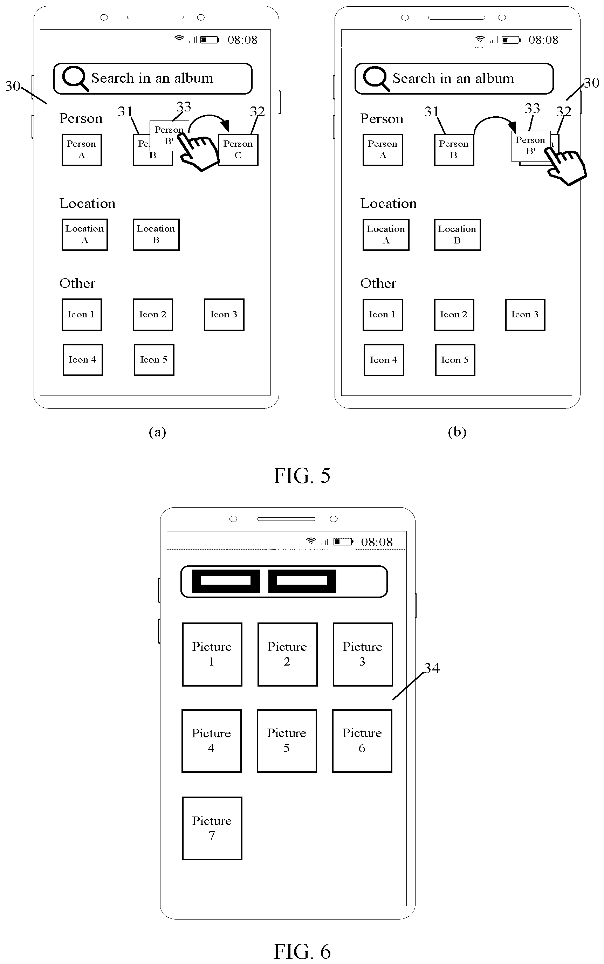

For example, with reference to FIG. 5 and FIG. 6, the following exemplarily describes a possible implementation of the search method.

As shown in (a) in FIG. 5, in the album search interface 30, when the user needs to search for a picture in an album by using two label icons (for example, a label icon 31 and a label icon 32), that is, when a picture that meets both the label icon 31 (corresponding to the label of the person B) and the label icon 32 (corresponding to the label of the person C) is being searched for, the following operation may be performed by moving the operable sub-icon:

As shown in (a) in FIG. 5, the user may tap the label icon 31, and then an operable sub-icon 33 of the label icon 31 appears on the label icon 31.

As shown in (b) in FIG. 5, if the user moves the operable sub-icon 33 onto the label icon 32, and releases the hand and leaves a screen, as shown in FIG. 6, a plurality of pictures 34 (search results) that match label information indicated by the label icon 31 and the label icon 32 in the album are popped up. In this case, after the user moves the label icon of the person B onto the label icon of the person C, all pictures that include both the person B and the person C in the album are automatically popped up. In this way, a multi-label combination search can be implemented by dragging one label icon onto another label icon, thereby bringing more convenient, fast, and humanized interaction experience to the user.

The following exemplarily provides possible application scenarios of the search method provided in this embodiment of this application.

Application scenario 1: It is assumed that the user took his or her mother on a trip to Sanya last month. If the user now wants to quickly find a photo taken for the mother in Sanya, the user only needs to move a label icon of the mother in a person label bar onto a label icon of Sanya in a location label bar, to complete a picture search.

Application scenario 2: If the user wants to quickly find a group photo of the user with a friend A, the user needs to move a label icon of the user onto a label icon of the friend A in a person label bar of the album search interface, to complete a picture search.

In this embodiment of this application, an operation can be performed by moving an operable sub-icon, and a fast and convenient combination label search can be performed, thereby significantly improving an operation speed of the user.

### Implementation 2

For example, the foregoing step 203 may be specifically implemented by the following step 203B.

Step 203B: The electronic device receives a first sub-input performed by the user on the first sub-icon and a second sub-input on the second icon.

Each of the first sub-input and the second sub-input may be a drag input, or a tap input (for example, a single-tap input or a double-tap input); or may be any other input that meets an actual use requirement. For example, the first sub-input is a drag input, and the second sub-input is a double-tap input.

In this embodiment of this application, the user may perform one input on the first sub-icon and the second icon to select the first icon and the second icon; or may separately perform inputs on the first sub-icon and the second icon to select the first icon and the second icon. In this way, the user can select a label icon according to an individual requirement, thereby improving operation experience of the user.

### Implementation 3

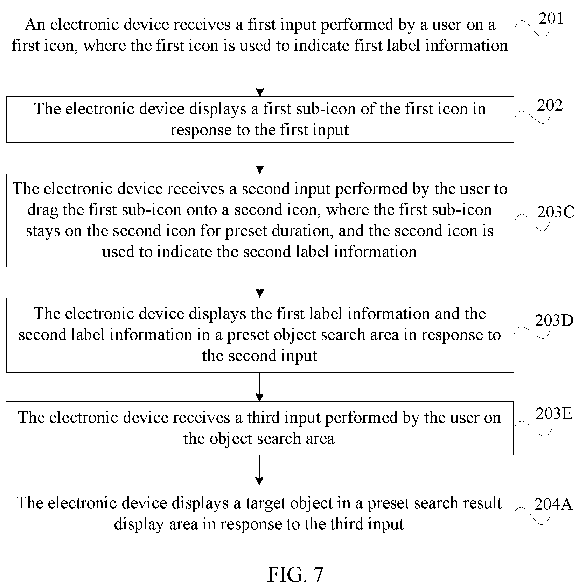

In this embodiment of this application, with reference to FIG. 2, as shown in FIG. 7, the foregoing step 203 may be specifically implemented by the following step 203C to step 203E. Correspondingly, the foregoing step 204 may be specifically implemented by the following step 204A.

Step 203C: The electronic device receives the second input performed by the user to drag the first sub-icon onto the second icon, where the first sub-icon stays on the second icon for preset duration, and the second icon is used to indicate the second label information.

Optionally, in this embodiment of this application, the preset duration may be 2 seconds, or may be 5 seconds, or may be any other duration that meets an actual use requirement. For example, the preset duration is longer than 2 seconds. This may be specifically determined according to an actual use requirement, and is not limited in this embodiment of this application.

Step 203D: The electronic device displays the first label information and the second label information in a preset object search area in response to the second input.

In this embodiment of this application, the first label information and the second label information are displayed in the preset object search area, so that the user can view which label icons are currently selected, and the user can continue to select another label icon or delete a label icon from selected label icons. In this way, efficiency of performing a multi-label combination search by the electronic device can be improved.

Step 203E: The electronic device receives a third input performed by the user on the object search area.

The user may trigger the electronic device to start a search by performing an input on the object search area.

Optionally, the third input may be a slide input, may be a tap input, or may be any other possible input. For example, the third input may be a single-tap input performed by the user on a search control in the object search area.

Step 204A: The electronic device displays the target object in a preset search result display area in response to the third input.

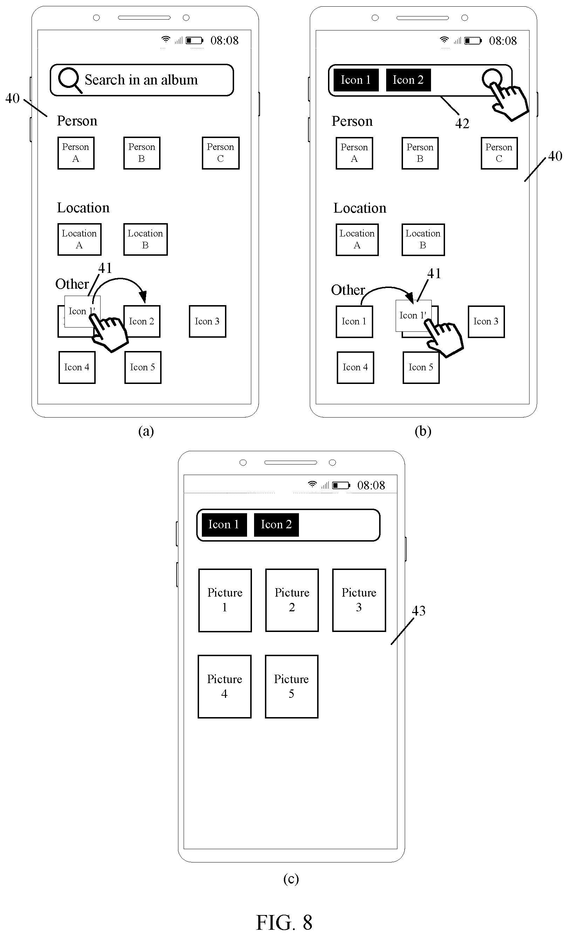

With reference to FIG. 8, the following exemplarily describes a specific implementation of the search method provided in this embodiment of this application.

As shown in (a) in FIG. 8, the user may tap a label 1 in an album search interface 40, and then an operable sub-icon 41 appears on the label 1.

As shown in (b) in FIG. 8, after the user moves the sub-icon 41 of the label 1 onto a label 2 and stays for more than 2 seconds, the electronic device may display selected labels: the label 1 and the label 2 in a preset object search area 42. If the user confirms the selected labels, the user may tap the search control 42 to trigger the electronic device to perform a picture search according to a combination of the plurality of current labels.

Then, as shown in (c) in FIG. 8, the electronic device displays, in a preset search result display area 43, pictures obtained through searching according to the label 1 and the label 2.

In this embodiment of this application, the user may first select two label icons, that is, select two pieces of label information, and then tap a search control in an object search area to trigger the electronic device to search for objects associated with the two pieces of label information. In this way, in this embodiment of this application, label information can be can visually viewed, and a to-be-searched file is quickly searched for through a combination of a plurality of pieces of label information, thereby improving file search efficiency and user interaction experience.

Further, optionally, after the user selects the first icon and the second icon, the user may further select another label icon. In this way, the user may search for a picture by using more than two label icons, thereby improving efficiency and accuracy of a multi-label combination search by the electronic device.

For example, after the foregoing step 203D and before the foregoing step 203E, the search method provided in this embodiment of this application further includes the following step 206 and step 207. Correspondingly, before the foregoing step 204, the foregoing method further includes the following step 208.

Step 206: The electronic device receives a fourth input performed by the user on a third icon, where the third icon is used to indicate third label information.

The fourth input may be an input performed by the user on the third icon (for example, a single-tap input or a double-tap input); or the fourth input may be an input performed by the user on the first sub-icon and the third icon.

For example, the fourth input may be an input of dragging the first sub-icon onto the third icon; or the fourth input may be the third sub-input on the first sub-icon and the fourth sub-input on the third icon.

For descriptions of the third icon, refer to the foregoing detailed descriptions of the first icon. Details are not described herein again.

Step 207: The electronic device displays the third label information in the preset object search area.

In this embodiment of this application, the first label information, the second label information, and the third label information are displayed in the preset object search area, so that the user can view which label icons are currently selected, and the user can continue to select another label icon or delete a label icon from selected label icons. In this way, efficiency of performing a multi-label combination search by the electronic device can be improved.

Step 208: The electronic device searches for at least one search sub-object that matches the first label information, the second label information, and the third label information.

The target object may include at least one search sub-object, and each search sub-object is obtained through searching based on the first label information, the second label information, and the third label information.

Optionally, after the foregoing step 206 and before the foregoing step 207, the search method provided in this embodiment of this application further includes the following step 209 to step 210. Correspondingly, the foregoing step 207 may be specifically implemented by the following step 207A.

Step 209: The electronic device displays a third sub-icon of the third icon.

For descriptions of the third sub-icon, refer to the foregoing detailed descriptions of the first sub-icon. Details are not described herein again.

Step 210: The electronic device receives a fifth input performed by the user on the third sub-icon and a target icon, where the target icon is the first icon or the second icon.

For example, the fifth input may be an input performed by the user to drag the third sub-icon onto the target icon. For example, the fifth input may be an input performed by the user to drag the third sub-icon to the first icon; or the fifth input may be an input performed by the user to drag the third sub-icon onto the second icon.

For another example, the fifth input may be a fifth sub-input performed by the user on the third sub-icon and a sixth sub-input on the target icon. For example, the fifth input may be a single-tap input performed by the user on the third sub-icon and a single-tap input on the first icon; or the fifth input may be a single-tap input performed by the user on the third sub-icon and a single-tap input on the second icon.

Step 207A: The electronic device displays the third label information in the preset object search area in response to the fifth input.

In this embodiment of this application, the user may first select three (or more) label icons, that is, select three (or more) pieces of label information, display the three (or more) pieces of label information in an object search area (for example, a search box), and then tap a search control in the object search area to trigger the electronic device to search for objects associated with the three (or more) pieces of label information. In this way, in this embodiment of this application, label information can be can visually viewed, and a to-be-searched file is quickly searched for through a combination of a plurality of pieces of label information, thereby improving file search efficiency and user interaction experience.

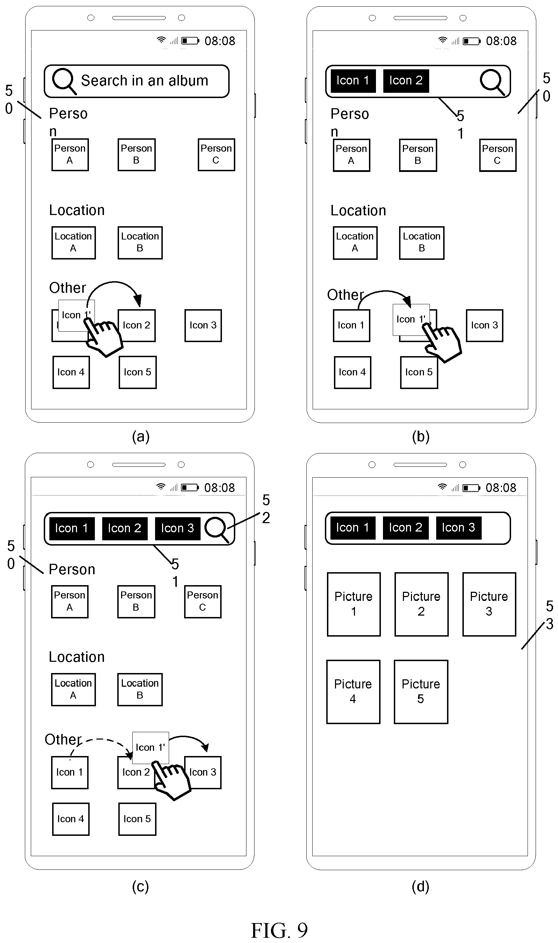

With reference to FIG. 9, the following exemplarily describes a specific implementation of the search method provided in this embodiment of this application.

When the user needs to search for a picture by using a plurality of pieces of label information, operations may be performed in the following manner:
As shown in (a) in FIG. 9, the user may tap an icon 1 in an album search interface 50, and then an operable sub-icon appears on the icon 1.

As shown in (b) in FIG. 9, after the user moves a sub-icon (icon 1') of the icon 1 onto the icon 2 and stays for more than 2 seconds, the electronic device may display selected icons in a search area 51: the icon 1 (indicating label information 1) and the icon 2 (indicating label information 2). It should be noted that, after the user moves the icon 1' onto the icon 2, if the user releases a hand, display of the icon 1' disappears.

As shown in (c) in FIG. 9, if the user does not release the hand, the user may continue to move the icon 1' onto an icon 3, and stay for more than 2 seconds, and then the electronic device may add the icon 3 to the search area 51. In this case, the search area 51 displays selected icons: the icon 1, the icon 2, and the icon 3.

As shown in (c) in FIG. 9, if the user confirms the selected icons, the user may tap a search control 52 to trigger the electronic device to perform a multi-label combination search according to the currently selected icons. Then, as shown in (d) in FIG. 9, the electronic device displays, in a preset search result display area 53, pictures obtained through searching according to the icon 1, the icon 2, and the icon 3.

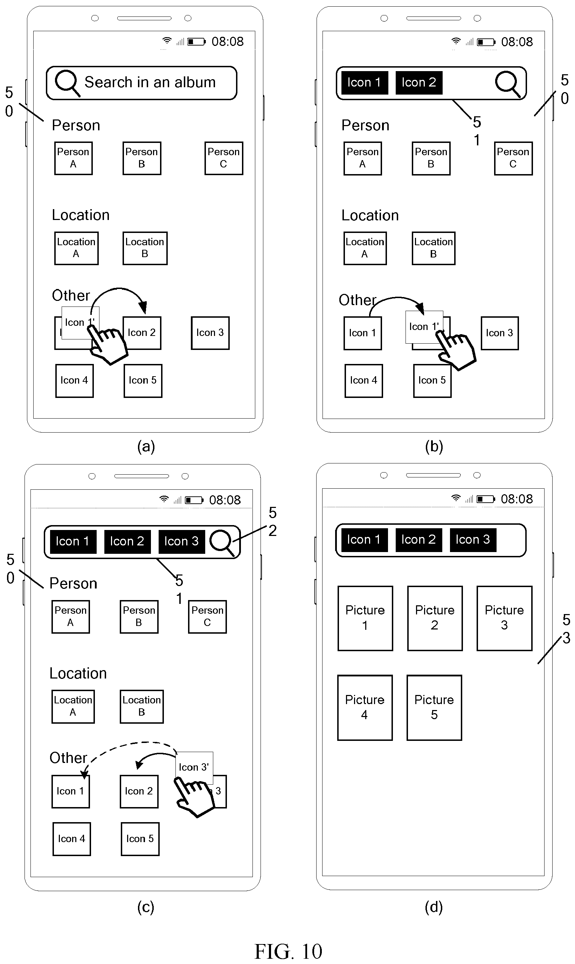

FIG. 10 exemplarily shows another possible input manner in which the user selects the icon 1, the icon 2, and the icon 3. As shown in (a) and (b) in FIG. 10, the user may select the icon 1 and the icon 2 in an input manner shown in (a) and (b) in FIG. 9, and display the selected icon 1 and icon 2 in the search area 51. Different from FIG. 9, (c) in FIG. 10 shows another possible selection manner, that is, an input on the icon 3 triggers display of a sub-icon (icon 3') of the icon 3. Then, the user may drag the icon 3' onto the icon 1 or drag the icon 3' onto the icon 2, to trigger display of the icon 1, the icon 2, and the icon 3 in the search area 51. If the user taps the search control 52, the electronic device may be triggered to perform a multi-label combination search according to the currently selected icons. Then, as shown in (d) in FIG. 10, the electronic device displays, in the preset search result display area 53, pictures obtained through searching according to the icon 1, the icon 2, and the icon 3.

The following exemplarily provides possible application scenarios of the search method provided in this embodiment of this application.

Application Scenario 1: If the user wants to search for a photo taken when he or she goes to the beach in Shenzhen, the user may quickly search for a photo in an album by selecting three pieces of label information: "Me (Person)", "Shenzhen", and "Beach".

Application scenario 2: It is assumed that the user goes to the park with his or her family last week. If the user wants to search for a group photo taken next to the fountain, the user may quickly search for a photo in an album by selecting three pieces of label information: "Group photo", "Park", and "Fountain".

According to the method for implementing a multi-label information combination search in an album provided in this embodiment of this application, a label information combination operation is performed on a label preview interface, so that a picture multi-label information search can be quickly implemented, thereby bringing more convenient, rapid, and humanized interaction experience to the user, and increasing interest and operability of an album search function.

In this embodiment of this application, various convenient operations may be added to a camera and an album of a mobile terminal, to avoid a type input or a similar tedious operation, thereby improving operability of the user and improving interaction experience.

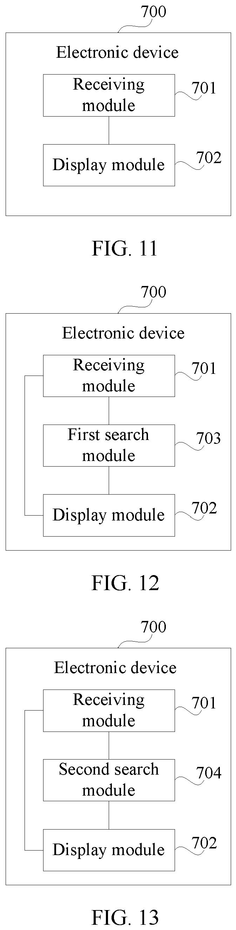

As shown in FIG. 11, an embodiment of this application provides an electronic device 700. The electronic device 700 may include a receiving module 701 and a display module 702.

The receiving module 701 is configured to receive a first input performed by a user on a first icon, where the first icon is used to indicate first label information;
the display module 702 is configured to display a first sub-icon of the first icon in response to the first input received by the receiving module 701;
the receiving module 701 is further configured to receive a second input performed by the user on the first sub-icon displayed by the display module 702 and a second icon, where the second icon is used to indicate second label information; and
the display module 702 is further configured to display a target object in response to the second input received by the receiving module 701, where the target object is obtained through searching based on the first label information and the second label information.

Optionally, with reference to FIG. 11, as shown in FIG. 12, the electronic device provided in this embodiment of this application further includes a first search module 703.The first search module 703 is configured to: before the display module 702 displays the target object, search for at least one search sub-object that matches the first label information and the second label information, where the target object includes the at least one search sub-object.

Optionally, the receiving module 701 is specifically configured to: receive the second input performed by the user to drag the first sub-icon onto the second icon; or receive a first sub-input performed by the user on the first sub-icon and a second sub-input on the second icon.

Optionally, the receiving module 701 is specifically configured to receive the second input performed by the user to drag the first sub-icon onto the second icon, where the first sub-icon stays on the second icon for preset duration;
the display module 702 is specifically configured to display the first label information and the second label information in a preset object search area in response to the second input;
the receiving module 701 is specifically configured to receive a third input performed by the user on the object search area; and
the display module 702 is specifically configured to display the target object in a preset search result display area in response to the third input.

Optionally, with reference to FIG. 11, as shown in FIG. 13, the electronic device provided in this embodiment of this application further includes a second search module 704.

The receiving module 701 is further configured to: after the display module 702 displays the first label information and the second label information in the preset object search area and before the receiving module 701 receives the third input performed by the user on the object search area, receive a fourth input performed by the user on a third icon, where the third icon is used to indicate third label information;
the display module 702 is further configured to display the third label information in the preset object search area; and
the second search module 704 is configured to: before the display module 702 displays the target object, search for at least one search sub-object that matches the first label information, the second label information, and the third label information, where
the target object is obtained through searching based on the first label information, the second label information, and the third label information.

Optionally, the receiving module 701 is specifically configured to receive the fourth input performed by the user on the first sub-icon and the third icon.

Optionally, the display module 702 is further configured to: after the receiving module 701 receives the fourth input performed by the user on the third icon and before the display module displays the third label information in the preset object search area, display a third sub-icon of the third icon.

Further, the receiving module 701 is further configured to receive a fifth input performed by the user on the third sub-icon displayed by the display module 702 and a target icon, where the target icon is the first icon or the second icon.

Further, the display module 702 is specifically configured to display the third label information in the preset object search area in response to the fifth input received by the receiving module 701.

It should be noted that the first search module and the second search module may be a same module, or may be two independent modules.

The electronic device provided in this embodiment of this application can implement the processes implemented by the electronic device in the foregoing method embodiment. To avoid repetition, details are not described herein again.

According to the electronic device provided in this embodiment of this application, a first input performed by a user on a first icon may be received, where the first icon is used to indicate first label information; a first sub-icon of the first icon is displayed in response to the first input; a second input performed by the user on the first sub-icon and a second icon is received, where the second icon is used to indicate second label information; and a target object is displayed in response to the second input, where the target object is obtained through searching based on the first label information and the second label information. This embodiment of this application may be applied to a scenario in which when one or more files are quickly searched for in a large number of files, the user only needs to perform the first input on the first icon to trigger display of the sub-icon of the first icon, and perform the second input on the sub-icon and another icon, so that the electronic device is triggered to perform a multi-label combination search according to label information indicated by each icon selected by the user. Compared with an existing search manner, the operations in this embodiment of this application are simpler and more convenient, and search efficiency is higher.

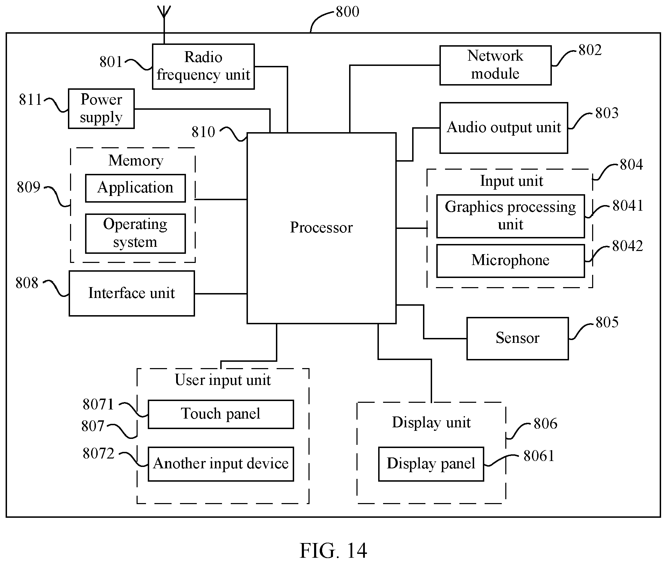

FIG. 14 is a schematic structural diagram of hardware of an electronic device according to the embodiments of this application. As shown in FIG. 14, an electronic device 800 includes but is not limited to components such as a radio frequency unit 801, a network module 802, an audio output unit 803, an input unit 804, a sensor 805, a display unit 806, a user input unit 807, an interface unit 808, a memory 809, a processor 810, and a power supply 811. A person skilled in the art may understand that a structure of the electronic device shown in FIG. 14 constitutes no limitation on the electronic device, and the electronic device may include more or fewer components than those shown in the figure, or have a combination of some components, or have a different component arrangement. In this embodiment of this application, the electronic device includes but is not limited to a mobile phone, a tablet computer, a notebook computer, a palmtop computer, an in-vehicle terminal, a wearable device, a pedometer, and the like.

The user input unit 807 is configured to receive a first input performed by a user on a first icon, where the first icon is used to indicate first label information. The display unit 806 is configured to display a first sub-icon of the first icon in response to the first input received by the user input unit 807. The user input unit 807 is further configured to receive a second input performed by the user on the first sub-icon displayed by the display unit 806 and a second icon, where the second icon is used to indicate second label information. The display unit 806 is further configured to display a target object in response to the second input received by the user input unit 807, where the target object is obtained through searching based on the first label information and the second label information.

An embodiment of this application provides an electronic device. The electronic device may receive a first input performed by a user on a first icon, where the first icon is used to indicate first label information; display a first sub-icon of the first icon in response to the first input; receive a second input performed by the user on the first sub-icon and a second icon, where the second icon is used to indicate second label information; and display a target object in response to the second input, where the target object is obtained through searching based on the first label information and the second label information. This embodiment of this application may be applied to a scenario in which when one or more files are quickly searched for in a large number of files, the user only needs to perform the first input on the first icon to trigger display of the sub-icon of the first icon, and perform the second input on the sub-icon and another icon, so that the electronic device is triggered to perform a multi-label combination search according to label information indicated by each icon selected by the user. Compared with an existing search manner, the operations in this embodiment of this application are simpler and more convenient, and search efficiency is higher.

It should be understood that, in this embodiment of this application, the radio frequency unit 801 may be configured to receive and send information or a signal in a call process. Specifically, after receiving downlink data from a base station, the radio frequency unit 801 sends the downlink data to the processor 810 for processing. In addition, the radio frequency unit 801 sends uplink data to the base station. Usually, the radio frequency unit 801 includes but is not limited to an antenna, at least one amplifier, a transceiver, a coupler, a low noise amplifier, a duplexer, and the like. In addition, the radio frequency unit 801 may communicate with a network and another device through a wireless communication system.

The electronic device 800 provides wireless broadband Internet access for the user by using the network module 802, for example, helping the user to send and receive an e-mail, brows a web page, and access streaming media.

The audio output unit 803 may convert audio data received by the radio frequency unit 801 or the network module 802 or stored in the memory 809 into an audio signal and output the audio signal as a sound. In addition, the audio output unit 803 may further provide an audio output (for example, a call signal received voice, or a message received voice) related to a specific function implemented by the electronic device 800. The audio output unit 803 includes a speaker, a buzzer, a telephone receiver, and the like.

The input unit 804 is configured to receive an audio signal or a video signal. The input unit 804 may include a graphics processing unit (graphics processing unit, GPU) 8041 and a microphone 8042, and the graphics processing unit 8041 processes image data of a still picture or video obtained by an image capture apparatus (such as a camera) in a video capture mode or an image capture mode. A processed image frame may be displayed on the display unit 806. The image frame processed by the graphics processing unit 8041 may be stored in the memory 809 (or another storage medium) or sent by using the radio frequency unit 801 or the network module 802. The microphone 8042 may receive a sound and can process such sound into audio data. Processed audio data may be converted, in a call mode, into a format that can be sent to a mobile communication base station by using the radio frequency unit 801 for output.

The electronic device 800 further includes at least one sensor 805 such as a light sensor, a motion sensor, and another sensor. Specifically, the light sensor includes an ambient light sensor and a proximity sensor. The ambient light sensor may adjust luminance of the display panel 8061 based on brightness of ambient light. The proximity sensor may turn off the display panel 8061 and/or backlight when the electronic device 800 moves to an ear. As a type of the motion sensor, an accelerometer sensor may detect an acceleration value in each direction (generally, three axes), and detect a value and a direction of gravity when the accelerometer sensor is static, and may be used in an application for recognizing a posture of the electronic device (such as screen switching between landscape and portrait modes, a related game, or magnetometer posture calibration), a function related to vibration recognition (such as a pedometer or a knock), and the like. The sensor 805 may further include a fingerprint sensor, a pressure sensor, an iris sensor, a molecular sensor, a gyroscope, a barometer, a hygrometer, a thermometer, an infrared sensor, and the like. Details are not described herein.

The display unit 806 is configured to display information entered by a user or information provided for a user. The display unit 806 may include a display panel 8061. The display panel 8061 may be configured in a form of a liquid crystal display (Liquid Crystal Display, LCD), an organic light-emitting diode (organic light-emitting diode, OLED), or the like.

The user input unit 807 may be configured to: receive entered digital or character information, and generate key signal input related to a user setting and function control of the electronic device. Specifically, the user input unit 807 includes a touch panel 8071 and another input device 8072. The touch panel 8071 is also referred to as a touchscreen, and may collect a touch operation performed by a user on or near the touch panel 8071 (such as an operation performed by a user on the touch panel 8071 or near the touch panel 8071 by using any proper object or accessory, such as a finger or a stylus). The touch panel 8071 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, and sends the touch point coordinates to the processor 810, and can receive and execute a command sent by the processor 810. In addition, the touch panel 8071 may be of a resistive type, a capacitive type, an infrared type, a surface acoustic wave type, or the like. The user input unit 807 may include another input device 8072 in addition to the touch panel 8071. Specifically, the another input device 8072 may include but is not limited to a physical keyboard, a functional button (such as a volume control button or a power on/off button), a trackball, a mouse, and a joystick. Details are not described herein.

Further, the touch panel 8071 may cover the display panel 8061. When detecting the touch operation on or near the touch panel 8071, the touch panel 8071 transmits the touch operation to the processor 810 to determine a type of a touch event, and then the processor 810 provides corresponding visual output on the display panel 8061 based on the type of the touch event. In FIG. 14, although the touch panel 8071 and the display panel 8061 are used as two independent parts to implement input and output functions of the electronic device, in some embodiments, the touch panel 8071 and the display panel 8061 may be integrated to implement the input and output functions of the electronic device. This is not specifically limited herein.

The interface unit 808 is an interface for connecting an external apparatus with the electronic device 800. For example, the external apparatus may include a wired or wireless headphone port, an external power supply (or a battery charger) port, a wired or wireless data port, a storage card port, a port used to connect to an apparatus having an identity module, an audio input/output (I/O) port, a video I/O port, a headset port, and the like. The interface unit 808 may be configured to receive input (for example, data information and power) from an external apparatus and transmit the received input to one or more elements in the electronic device 800 or may be configured to transmit data between the electronic device 800 and an external apparatus.

The memory 809 may be configured to store a software program and various data. The memory 809 may mainly include a program storage area and a data storage area. The program storage area may store an operating system, an application required by at least one function (such as a sound play function or an image play function), and the like. The data storage area may store data (such as audio data or an address book) created based on use of the mobile phone, and the like. In addition, the memory 809 may include a high-speed random access memory, and may further include a nonvolatile memory, for example, at least one magnetic disk storage device, a flash storage device, or another volatile solid-state storage device.

The processor 810 is a control center of the electronic device, connects all parts of the entire electronic device by using various interfaces and lines, and performs various functions of the electronic device and data processing by running or executing a software program and/or a module that are/is stored in the memory 809 and by invoking data stored in the memory 809, to overall monitor the electronic device. The processor 810 may include one or more processing units. Optionally, an application processor and a modem processor may be integrated into the processor 810. The application processor mainly processes an operating system, a user interface, an application, and the like. The modem processor mainly processes wireless communications. It can be understood that, alternatively, the modem processor may not be integrated into the processor 810.

The electronic device 800 may further include the power supply 811 (such as a battery) that supplies power to each component. Optionally, the power supply 811 may be logically connected to the processor 810 by using a power supply management system, so as to implement functions such as charging and discharging management, and power consumption management by using the power supply management system.

In addition, the electronic device 800 includes some function modules not shown, and details are not described herein.

Optionally, an embodiment of this application further provides an electronic device, including the processor 810 and the memory 809 shown in FIG. 14, and a computer program that is stored in the memory 809 and that can run on the processor 810. When the processor 810 executes the computer program, the foregoing processes of the search method embodiment are implemented and a same technical effect can be achieved. To avoid repetition, details are not described herein again.

An embodiment of this application further provides a computer-readable storage medium. The computer-readable storage medium stores a computer program, and when the computer program is executed by a processor, the processes of the foregoing search method embodiment are implemented and a same technical effect can be achieved. To avoid repetition, details are not described herein again. The computer-readable storage medium may include a read-only memory (read-only memory, ROM), a random access memory (random access memory, RAM), a magnetic disk, an optical disc, or the like.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing an electronic device (which may be a mobile phone, a computer, a server, an air conditioner, a network device, or the like) to perform the methods disclosed in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A search method, applied to an electronic device, wherein the method comprises:
receiving a first input performed by a user on a first icon, wherein the first icon is used to indicate first label information;
displaying a first sub-icon of the first icon in response to the first input;
receiving a second input performed by the user on the first sub-icon and a second icon, wherein the second icon is used to indicate second label information; and
displaying a target object in response to the second input, wherein the target object is obtained through searching based on the first label information and the second label information.

2. The method according to claim 1, wherein before the displaying a target object, the method further comprises: searching for at least one search sub-object that matches the first label information and the second label information, wherein
the target object comprises the at least one search sub-object.

3. The method according to claim 1, wherein the receiving a second input performed by the user on the first sub-icon and a second icon comprises:
receiving the second input performed by the user to drag the first sub-icon onto the second icon; or
receiving a first sub-input performed by the user on the first sub-icon and a second sub-input on the second icon.

4. The method according to claim 1, wherein the receiving a second input performed by the user on the first sub-icon and a second icon comprises:
receiving the second input performed by the user to drag the first sub-icon onto the second icon, wherein the first sub-icon stays on the second icon for preset duration;
displaying the first label information and the second label information in a preset object search area in response to the second input; and
receiving a third input performed by the user on the object search area; and
the displaying a target object in response to the second input comprises:
displaying the target object in a preset search result display area in response to the third input.

5. The method according to claim 4, wherein after the displaying the first label information and the second label information in a preset object search area and before the receiving a third input performed by the user on the object search area, the method further comprises:
receiving a fourth input performed by the user on a third icon, wherein the third icon is used to indicate third label information; and
displaying the third label information in the preset object search area; and
before the displaying a target object, the method further comprises:
searching for at least one search sub-object that matches the first label information, the second label information, and the third label information, wherein
the target object is associated with the first label information, the second label information, and the third label information.

6. The method according to claim 5, wherein the receiving a fourth input performed by the user on a third icon comprises:
receiving the fourth input performed by the user on the first sub-icon and the third icon.

7. The method according to claim 5, wherein after the receiving a fourth input performed by the user on a third icon and before the displaying the third label information in the preset object search area, the method further comprises:
displaying a third sub-icon of the third icon; and
receiving a fifth input performed by the user on the third sub-icon and a target icon, wherein the target icon is the first icon or the second icon; and
the displaying the third label information in the preset object search area comprises:
displaying the third label information in the preset object search area in response to the fifth input.

8. An electronic device, wherein the electronic device comprises a receiving module and a display module, wherein
the receiving module is configured to receive a first input performed by a user on a first icon, wherein the first icon is used to indicate first label information;
the display module is configured to display a first sub-icon of the first icon in response to the first input received by the receiving module;
the receiving module is further configured to receive a second input performed by the user on the first sub-icon displayed by the display module and a second icon, wherein the second icon is used to indicate second label information; and
the display module is further configured to display a target object in response to the second input received by the receiving module, wherein the target object is obtained through searching based on the first label information and the second label information.

9. The electronic device according to claim 8, wherein the electronic device further comprises a first search module; and
the first search module is configured to: before the display module displays the target object, search for at least one search sub-object that matches the first label information and the second label information, wherein
the target object comprises the at least one search sub-object.

10. The electronic device according to claim 8, wherein
the receiving module is specifically configured to: receive the second input performed by the user to drag the first sub-icon onto the second icon; or receive a first sub-input performed by the user on the first sub-icon and a second sub-input on the second icon.

11. The electronic device according to claim 8, wherein
the receiving module is specifically configured to receive the second input performed by the user to drag the first sub-icon onto the second icon, wherein the first sub-icon stays on the second icon for preset duration;
the display module is specifically configured to display the first label information and the second label information in a preset object search area in response to the second input;
the receiving module is specifically configured to receive a third input performed by the user on the object search area; and
the display module is specifically configured to display the target object in a preset search result display area in response to the third input.

12. The electronic device according to claim 11, wherein the electronic device further comprises a second search module;
the receiving module is further configured to: after the display module displays the first label information and the second label information in the preset object search area and before the receiving module receives the third input performed by the user on the object search area, receive a fourth input performed by the user on a third icon, wherein the third icon is used to indicate third label information;
the display module is further configured to display the third label information in the preset object search area; and
the second search module is configured to: before the display module displays the target object, search for at least one search sub-object that matches the first label information, the second label information, and the third label information, wherein
the target object is obtained through searching based on the first label information, the second label information, and the third label information.

13. The electronic device according to claim 12, wherein the receiving module is specifically configured to receive the fourth input performed by the user on the first sub-icon and the third icon.

14. The electronic device according to claim 12, wherein
the display module is further configured to: after the receiving module receives the fourth input performed by the user on the third icon and before the display module displays the third label information in the preset object search area, display a third sub-icon of the third icon;
the receiving module is further configured to receive a fifth input performed by the user on the third sub-icon displayed by the display module and a target icon, wherein the target icon is the first icon or the second icon; and
the display module is specifically configured to display the third label information in the preset object search area in response to the fifth input received by the receiving module.

15. An electronic device, wherein the electronic device comprises a processor, a memory, and a computer program that is stored in the memory and that can be run on the processor, wherein when the computer program is executed by the processor, the steps of the search method according to any one of claims 1 to 7 are implemented.

16. A computer-readable storage medium, wherein the computer-readable storage medium stores a computer program, and when the computer program is executed by a processor, the steps of the search method according to any one of claims 1 to 7 are implemented.
